# EUROPÄISCHE PATENTSCHRIFT

(11) **EP 3 757 417 B1**
(45) Veröffentlichungstag und Bekanntmachung des Hinweises auf die Patenterteilung: **16.11.2022**
(21) Anmeldenummer: 19182929.0
(22) Anmeldetag: 27.06.2019
(51) Int. Cl.: F16D 43/202

(54) **ZWEIGANG-GETRIEBE SOWIE GURTSTRAFFER**
TWO-SPEED TRANSMISSION AND BELT TENSIONER
TRANSMISSION À DEUX RAPPORTS AINSI QU'UN PRÉTENSIONNEUR DE CEINTURE

(43) Veröffentlichungstag der Anmeldung: 30.12.2020
(73) Patentinhaber: IMS Gear SE & Co. KGaA, 78166 Donaueschingen (DE); Autoliv Development AB, 447 83 Vårgårda (SE)
(72) Erfinder: BREITHAUPT, Sebastian, 78052 Villingen-Schwenningen (DE); DREHER, Eric, 25337 Elmshorn (DE); LUCHT, Andreas, 25358 Horst (DE)
(74) Vertreter: Westphal, Mussgnug & Partner Patentanwälte mbB

(56) Entgegenhaltungen:
- WO-A1-2012/154911
- DE-A1-102014 118 700
- US-A- 2 128 715
- US-A1- 2004 079 828
- US-A1- 2007 051 841
- US-A1- 2013 341 451
- US-B2- 6 857 594

## Beschreibung

Die vorliegende Erfindung betrifft eine Ausdrückkupplung mit den Merkmalen des Anspruchs 1 sowie einen Gurtstraffer mit den Merkmalen des Anspruchs 14.

Gurtstraffer sind aus dem Stand der Technik in unterschiedlichen Ausgestaltungen vorbekannt und bilden ein passives Sicherheitssystem in einem Fahrzeug. Gurtstraffer werden verwendet, um den Sicherheitsgurt eines Fahrgastes nach dem Einnehmen der Sitzposition in dem Fahrzeug ordnungsgemäß anzulegen, wobei der Sicherheitsgurt derart gestrafft an den Fahrgast herangezogen wird, dass dieser in der Sitzposition sicher gehalten wird, aber dennoch ausreichend Bewegungsfreiheit genießt. Weiterhin werden Gurtstraffer verwendet, um bei einem Unfall oder kurz vor einer zu erwartenden Kollision den Sicherheitsgurt straffen, damit der Fahrgast früher an der Gesamtverzögerung des Fahrzeuges teilnimmt. Hierzu wird der Sicherheitsgurt innerhalb einer kurzen Zeit schnell und mit einem hohen Drehmoment angezogen, wodurch der Sicherheitsgurt besonders straff am Fahrgast anliegt und der Fahrgast vollständig an der Gesamtverzögerung teilnimmt.

Aus dem Stand der Technik sind Gurtstraffer vorbekannt, welche durch eine gespannte Feder oder eine kleine Sprengladung ausgelöst werden. Auch sind aus dem Stand der Technik Gurtstraffer vorbekannt, die elektromechanisch und reversibel ausgelöst werden können und bereits bei sensorisch erkannten Gefahrensituationen den Sicherheitsgurt straffen.

WO 2012154911 A1 lehrt eine Ausdrückkupplung, die eine Welle vor einer Überlast schützen soll. Beim Erreichen eines vorgegebenen Drehmoments, werden Kupplungsfinger aus einer Ausnehmung der Welle ausgedrückt und eine Übertragung des Drehmoments unterbrochen.

Weiteren Stand der Technik bilden DE 10 2014 118 700 A1, US 2 128 715 A und US 6 857 594 B2. Die US 2 128 715 A offenbart eine Ausdrückkupplung gemäß dem Oberbegriff vom Anspruch 1.

Als Nachteil der bisher bekannten elektromechanischen Gurtstraffer kann genannt werden, dass diese oftmals zusätzlich mit einer Federn oder einer kleineren Sprengladung zum Auslösen versehen sein müssen, um innerhalb kürzester Zeit den Sicherheitsgurt mit einer ausreichenden Spannkraft zu straffen. Hier setzt die vorliegende Erfindung an.

Es ist daher die zu lösende Aufgabe der Erfindung, einen verbesserten Gurtstraffer vorzuschlagen, der in zweckmäßiger Weise die aus dem Stand der Technik bekannten Nachteile elektromechanischer Gurtstraffer beseitigt und einerseits ein besonders schnelles Straffen des Sicherheitsgurtes ermöglicht, andererseits aber auch ein ausreichend hohes Drehmoment aufweist, um den Sicherheitsgurt straff genug an den Körper des Fahrgastes anzulegen.

Diese Aufgaben werden durch eine Ausdrückkupplung eines Gurtstraffers mit den Merkmalen des Anspruchs 1 gelöst. Weitere vorteilhafte Ausgestaltungen der Erfindung werden in den Unteransprüchen angegeben.

Die erfindungsgemäße Ausdrückkupplung für einen Gurtstraffer umfasst eine erste Welle, eine zweite Welle und ein Kupplungsteil, wobei das Kupplungsteil zwischen der ersten Welle und der zweiten Welle in einer eine Axialrichtung vorgebenden Längsachse angeordnet ist. Erfindungsgemäß weist das Kupplungsteil wenigstens einen Kupplungsfinger auf, der zum Übertragen eines Drehmoments von dem Kupplungsteil auf die erste Welle in wenigstens eine erste Ausnehmung der ersten Welle eingreift und beim Überschreiten eines zu übertragenden Drehmoments, welches vorbestimmbar ist, entgegen einer Federkraft in der Axialrichtung aus der ersten Ausnehmung der ersten Welle in wenigstens eine zweite Ausnehmung der zweiten Welle verschoben wird und vice versa.

Der Erfindung liegt also der Gedanke zugrunde, dass das Kupplungsteil wenigstens einen federbeweglichen Kupplungsfinger aufweist, der bis zum Erreichen eines vordefinierten Drehmomentes - auch nachfolgend Schaltmoment genannt - in die wenigstens erste Ausnehmung der ersten Welle greift und bis zum Erreichen dieses Schaltmomentes ein Drehmoment von dem Kupplungsteil auf die erste Welle überträgt. Beim Erreichen des Schaltmomentes wird der wenigstens eine federbewegliche Kupplungsfinger entgegen einer Federkraft aus der wenigstens einen ersten Ausnehmung in der Axialrichtung in die wenigstens eine zweite Ausnehmung der zweiten Welle verschoben, wodurch ein Übertragen des Drehmomentes von dem Kupplungsteil auf die erste Welle unterbrochen ist und fortan das Drehmoment von dem Kupplungsteil auf die zweite Welle übertragen wird. Sobald das zu übertragende Drehmoment wieder einen vorbestimmten Wert unterschreitet, wird der Kupplungsfinger durch die Federkraft aus der zweiten Ausnehmung zurück in die erste Ausnehmung der ersten Welle bewegt.

Das Drehmoment wird zwischen dem wenigstens einen Kupplungsfinger und der jeweiligen ersten oder zweiten Ausnehmung der ersten oder der zweiten Welle durch einen Formschluss realisiert, wobei der wenigstens eine Kupplungsfinger nach Art eines Mitnehmers in die jeweilige Ausnehmung eingreift.

Das vordefinierte Drehmoment kann durch eine entsprechende und im Nachfolgenden beschriebene Ausgestaltung des Kupplungsfingers, des Kupplungsteils und/oder der jeweiligen Ausnehmung vordefiniert werden.

Eine vorteilhafte Ausgestaltung der vorliegenden Erfindung sieht vor, dass der wenigstens eine Kupplungsfinger durch einen Federsteg mit dem Kupplungsteil verbunden ist. Insbesondere ist es bevorzugt, wenn der Federsteg und das Kupplungsteil einstückig ausgebildet sind und bevorzugt aus einem Federstahl hergestellt werden. Weiterhin ist es bevorzugt, wenn das Kupplungsteil ein plattenförmiges Teil ist, insbesondere wenn das Kupplungsteil ein Stanzteil ist, welches sich dadurch auszeichnet, dass es in großer Stückzahl kosteneffizient herstellbar ist.

Eine weitere vorteilhafte Ausgestaltung der vorliegenden Erfindung sieht vor, dass der Federsteg des wenigstens einen Kupplungsfingers ringförmig oder spiralförmig ausgebildet ist und einen freien Endbereich aufweist, an dem der Kupplungsfinger angeordnet ist. An dem freien Endbereich kann der wenigstens eine Kupplungsfinger durch geeignete Befestigungsmittel starr angeordnet sein, wobei bevorzugt der wenigstens eine Kupplungsfinger im Endbereich in eine Einsetzöffnung eingesetzt ist und in der Einsetzöffnung form-, kraft- und/oder stoffschlüssig befestigt ist. Insbesondere ist es bevorzugt, wenn der Kupplungsfinger in der Einsetzöffnung durch eine Bördelung und/oder eine Verschweißung befestigt ist.

Nach Maßgabe einer weiteren Ausgestaltung der vorliegenden Erfindung ist der Kupplungsfinger beabstandet zu der Längsachse angeordnet und weist einen ersten Endbereich und einen zweiten Endbereich auf. Der erste Endbereich kann in der Längsachse auf der der ersten Welle zugewandten Seite von dem Kupplungsteil abstehen und der zweite Endbereich auf der der zweiten Welle zugewandten Seite des Kupplungsteils. Die Länge L des wenigstens einen Kupplungsfingers entspricht dem Abstand A zwischen dem ersten Endbereich und dem zweiten Endbereich, wobei die Länge L ein Vielfaches einer Dicke t des Kupplungsteils entspricht. Bevorzugt ist ein Verhältnis L > t, weiter bevorzugt L ≥ 2t, noch weiter bevorzugt L ≥ 5t.

Darüber hinaus ist es bevorzugt, wenn die Länge L des wenigstens einen Kupplungsfingers in der Längsachse gemessen größer ist, als ein Abstand A zwischen der dem Kupplungsteil zugewandten Seite der ersten Welle und der dem Kupplungsteil zugewandten Seite der zweiten Welle, also L > A. Durch diese Ausgestaltung ist sichergestellt, dass der Kupplungsfinger zu jedem Zeitpunkt in mindestens eine der Ausnehmungen der ersten Welle und/oder der zweiten Welle eingreift und dass auch beim Erreichen des vordefinierten Drehmomentes der Sicherheitsgurt weiter gestrafft wird. Ein Leerlauf oder Freilauf ist vorzugsweise nicht erwünscht.

Es ist bevorzugt, wenn der erste Endbereich im unbelasteten Zustand des Kupplungsteils in die erste Ausnehmung der ersten Welle ragt. Hier und im Nachfolgenden wird unter einem unbelasteten Zustand der Ausdrückkupplung der Zustand verstanden, wenn kein Drehmoment durch das Kupplungsteil übertragen wird.

Gemäß einer weiteren vorteilhaften Ausgestaltung der vorliegenden Erfindung ist es vorgesehen, dass der wenigstens eine Kupplungsfinger kegelförmig oder keilförmig ausgebildet ist. Der Kupplungsfinger kann im Querschnitt zylindrisch, elliptisch, mehreckig ausgebildet sein oder eine beliebige Freiform aufweisen, wobei der erste Endbereich bevorzugt als Spitze ausgebildet ist und der zweite Endbereich als Stumpf, wodurch die Querschnittsfläche des ersten Endbereiches des Kupplungsfingers kleinere Querschnittsfläche ist als die Querschnittsfläche im zweiten Endbereich. Insbesondere ist es bevorzugt, wenn der wenigstens eine Kupplungsfinger kugelförmig oder keilförmig ausgebildet ist und einen Öffnungswinkel β aufweist, wobei der Öffnungswinkel β aufgrund des Prinzips der schiefen Ebene das Schaltmomentes bzw. das vordefinierte Drehmoment maßgeblich vorgibt. Der Öffnungswinkel β liegt bevorzugt in einem Wertebereich von 5° ≤ β ≤ 90°, weiter bevorzugt 15° ≤ β ≤ 60° .

Auch hat es sich als vorteilhaft erwiesen, wenn die erste Ausnehmung und/oder die zweite Ausnehmung wenigstens eine Kontaktfläche aufweisen bzw. aufweist, wobei die Kontaktfläche ausgebildet ist, das zu übertragende Drehmoment von dem wenigstens einen Kupplungsfinger auf die jeweilige Welle zu übertragen. Insbesondere sind die Kontaktflächen und die Kupplungsfinger derart aneinander angepasst, dass der Kupplungsfinger auf den Kontaktfläche der ersten Ausnehmung und der zweiten Ausnehmung möglichst flächig anliegen kann.

Darüber hinaus kann die Kontaktfläche ausgebildet sein, beim Übertragen des Drehmoments eine in Axialrichtung wirkende Kraft auf den wenigstens einen Kupplungsfinger aufzubringen, durch die der wenigstens eine Kupplungsfinger aus oder in die jeweilige Ausnehmung in Axialrichtung geschoben wird.

Beim Übertragen des Drehmomentes zwischen dem Kupplungsteil und der jeweiligen Welle entsteht durch die Kegel- oder Keilform und/oder durch die Kontaktfläche der jeweiligen Ausnehmung eine Axialkraft, durch die der wenigstens eine Kupplungsfinger in Axialrichtung verschoben wird.

Darüber hinaus hat es sich als vorteilhaft erwiesen, wenn die mindestens eine Kontaktfläche als eine in die Axialrichtung zulaufende Keilfläche ausgebildet ist. Demnach ist es bevorzugt, wenn die erste Ausnehmung auf der dem Kupplungsteil zugewandten Seite der ersten Welle einen sich verjüngenden Querschnitt aufweist, wodurch aufgrund der schiefen Ebene beim Übertragen eines Drehmoments zwischen der Kontaktfläche und dem wenigstens einen Kupplungsfinger eine Axialkraft resultiert, durch die der Kupplungsfinger entgegen einer Federkraft aus der ersten Ausnehmung gedrückt wird. Auch ist es vorteilhaft, wenn die zweiten Ausnehmungen auf der dem Kupplungsteil zugewandten Seite der zweiten Welle in Axialrichtung zulaufende Keilflächen aufweisen, wodurch beim Überschreiten des Schaltmomentes der wenigstens eine Kupplungsfinger zur Bildung eines vollständigen Formschlusses in die zweite Ausnehmung hineingeschoben wird.

Es ist vorteilhaft, wenn die jeweilige Ausnehmung eine zweite Kontaktfläche aufweist, die in Umfangsrichtung gesehen auf der diametralen Seite der zuvor beschriebenen Kontaktfläche in der Ausnehmung ausgebildet ist.

Die mindestens eine Kontaktfläche kann in einer Ebene ganz oder teilweise liegen, die in einem Winkel α geneigt zu einer Ebene angeordnet ist, die in der Längsachse liegt. Es ist bevorzugt, wenn der Winkel α bezogen auf die Ebene in der Längsachse 45° ≥ α ≥ 2,5° beträgt. Der Winkel α bestimmt ebenfalls maßgeblich das Schaltmoment. Je kleiner der Winkel α ist, desto größer ist das Schaltmoment.

Eine weitere bevorzugte Ausgestaltung der vorliegenden Erfindung sieht vor, dass um die Längsachse mehrere Kupplungsfinger angeordnet sind, die bevorzugt um die Längsachse umfangssymmetrisch angeordnet sind.

Darüber hinaus ist es ebenfalls vorteilhaft, wenn die erste Welle und die zweite Welle mehrere Ausnehmungen aufweisen, die ebenfalls bevorzugt umfangssymmetrisch um die Längsachse angeordnet sind. Weiterhin hat es sich als vorteilhaft erwiesen, wenn die Anzahl der ersten Ausnehmungen und der zweiten Ausnehmungen in der ersten Welle und der zweiten Welle der Anzahl an Kupplungsfinger oder einem Vielfachen der Anzahl der Kupplungsfinger entsprechen.

Weiterhin hat es sich als vorteilhaft erwiesen, wenn die erste Welle, die zweite Welle und das Kupplungsteil zueinander koaxial auf der Längsachse angeordnet sind.

Gemäß einer weiteren Ausgestaltung der vorliegenden Erfindung sind bzw. ist die erste Welle und/oder die zweite Welle als Zahnrad ausgebildet. Die erste Welle ist als ein erstes Zahnrad ausgebildet und die zweite Welle als ein zweites Zahnrad. Das erste Zahnrad und das zweite Zahnrad können in jeweils ein weiteres Zahnrad eingreifen, wodurch der Sicherheitsgurt durch einen entsprechenden Zugmechanismus gestrafft werden kann. Insbesondere ist es bevorzugt, wenn die Übersetzung des ersten Zahnrads und des zweiten Zahnrads ungleich sind, wobei weiter bevorzugt die Übersetzung des ersten Zahnrads größer ist als die Übersetzung des zweiten Zahnrads. Durch eine derart dimensioniert Paarung der Zahnräder kann bis zum Erreichen des Schaltmomentes in einem Schnellgang der Sicherheitsgurt gestrafft werden, währenddessen beim Überschreiten des zu übertragenden Drehmoments über das Schaltmomentes die Ausdrücckupplung in einen Langsamgang schaltet bzw. wechselt und ein hohes Drehmoment bewerkstelligt werden kann, wodurch der Sicherheitsgurt besonders straff angezogen werden kann.

Nach Maßgabe einer weiteren Ausgestaltung der vorliegenden Erfindung ist das Kupplungsteil mit einer Antriebswelle trieblich gekoppelt. Bevorzugt verbindet die Antriebswelle das Kupplungsteil mit einem elektrischen Antrieb, wobei die Antriebswelle die Rotationsachse des Kupplungsteils vorgibt.

Darüber hinaus ist es weiterhin vorteilhaft, wenn die erste Welle und/oder die zweite Welle drehbar auf der Antriebswelle gelagert sind. Eine derartige Anordnung der Komponenten der Ausdrückkupplung ermöglicht eine besonders einfache und kompakte Bauweise.

Ein weiterer Aspekt der vorliegenden Erfindung betrifft einen Gurtstraffer mit einer erfindungsgemäßen Ausdrückkupplung sowie ein Kraftfahrzeug mit wenigstens einem solchen Gurtstraffer.

Nachfolgend wird unter Bezugnahme auf die begleitenden Zeichnungen ein erfindungsgemäßes Ausführungsbeispiel der vorliegenden Erfindung im Detail dargestellt. Es zeigen:
- Figur 1: eine stark vereinfachte und teilweise geschnittene Darstellung der erfindungsgemäßen Ausdrückküpplung, umfassend eine erste Welle, eine zweite Welle und ein zwischen den Wellen angeordnetes Kupplungsteil, das ein Drehmoment zwischen dem Kupplungsteil und der ersten Welle überträgt,
- Figur 2: eine Darstellung der Ausdrückkupplung gemäß Figur 1 beim Erreichen des Schaltmoments,
- Figur 3: eine vereinfachte und teilweise geschnittene Darstellung der Ausdrückküpplung gemäß den Figuren 1 und 2 beim Übertragen eines Drehmomentes zwischen dem Kupplungsteil und der zweiten Welle,
- Figur 4: eine Seitenansicht des Kupplungsteils gemäß den Figuren 1 bis 3,
- Figur 5: eine Draufsicht des Kupplungsteils der Ausdrückkupplung mit vier Kupplungsfingern,
- Figur 6: ein Ausführungsbeispiel für eine Ausdrückkupplung mit auf der ersten Welle und zweiten Welle aufgebrachten Verzahnungen gemäß Figur 1 im nicht gekuppelten Zustand,
- Figur 7: das Ausführungsbeispiel von Figur 6 in einem Zustand bei Erreichen des Schaltmoments ähnlich zu Figur 2, und
- Figur 8: die Ausdrückkupplung von Figur 6 im gekuppelten Zustand ähnlich zu Figur 3.

Nachfolgend werden gleiche oder funktional gleiche Bauteile mit gleichen Bezugszeichen gekennzeichnet. Der Übersichtlichkeit halber sind in den einzelnen Figuren nicht alle gleichen oder funktional gleichen Teile mit einer Bezugsziffer versehen.

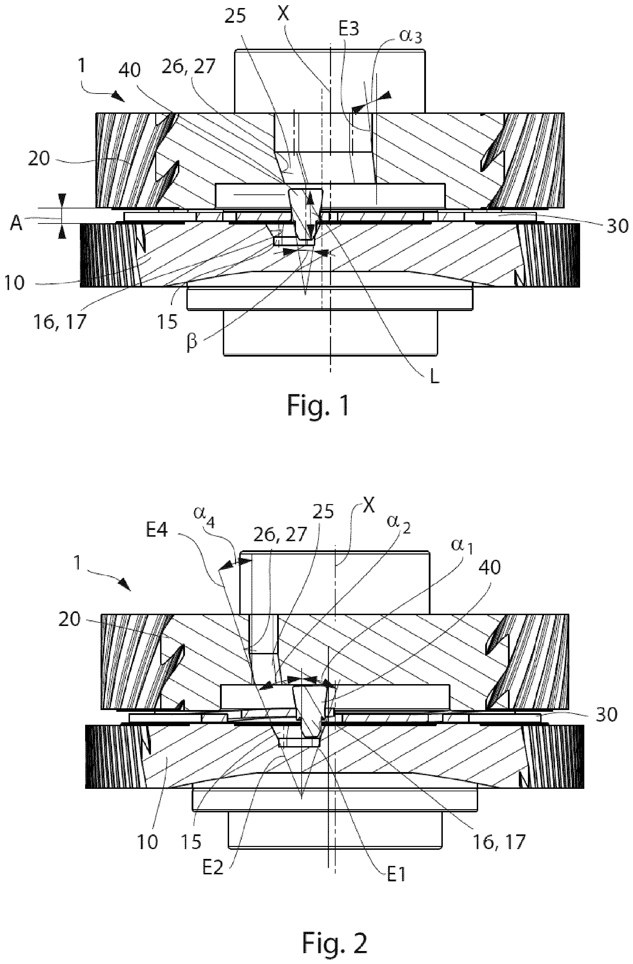

In Figur 1 ist eine erfindungsgemäße Ausdrückkupplung 1 eines Gurtstraffers dargestellt, aufweisend eine erste Welle 10, eine zweite Welle 20 und ein Kupplungsteil 30.

Die erste Welle 10, die zweite Welle 20 und das Kupplungsteil 30 sind entlang einer eine Axialrichtung vorgebenden Längsachse X drehbeweglich gelagert gehalten und sind bevorzugt zueinander koaxial ausgerichtet. Das Kupplungsteil 30 ist zwischen der ersten Welle 10 und der zweiten Welle 20 angeordnet, wobei die erste Welle 10 und die zweite Welle 20 in einem Abstand A zueinander angeordnet sind.

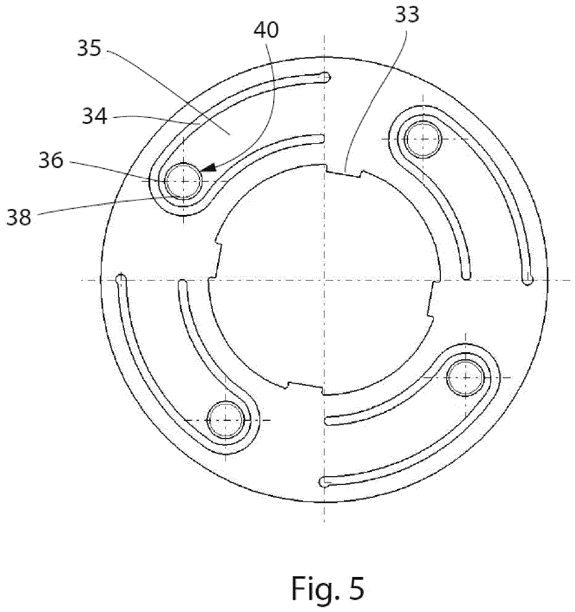

Das Kupplungsteil 30 kann mit einer (nicht dargestellten) Antriebswelle 60 gekoppelt sein und mittels der Antriebswelle durch einen Antrieb angetrieben werden. Das Kupplungsteil 30 kann ein oder mehrere Mittel 33 zur Bildung einer Welle-Nabe-Verbindung aufweisen. Beispielsweise können die Mittel 33 Nocken beinhalten, die - wie in Figur 5 dargestellt ist - eingerichtet sind, nach Art einer Passfeder in die Antriebswelle 60 zu greifen.

Die erste Welle 10 und die zweite Welle 20 können drehbar auf der Antriebswelle gelagert gehalten werden und können weiter mit einem (nicht dargestellten) Zugmechanismus verbunden sein, durch den ein (nicht dargestellter) Sicherheitsgurt gespannt werden kann.

Die erste Welle 10 weist auf der dem Kupplungsteil 30 zugewandten Seite über den Umfang um die Längsachse X vier symmetrisch angeordnete erste Ausnehmungen 15 auf. Die jeweilige erste Ausnehmung 15 ist gemäß den Figuren 1-3 mit zwei Kontaktflächen 16 versehen, die nach Art einer Keilfläche 17 in Axialrichtung derart ausgebildet sind, dass sich die jeweilige Ausnehmung 15 mit zunehmendem Abstand von dem Kupplungsteil 30 verjüngt. Die beiden Kontaktflächen 16 auf den diametralen Seiten der Ausnehmung 15 können in jeweils einer ersten Ebene E1 und einer zweiten Ebene E2 - siehe Figur 2 - angeordnet sein, wobei die erste Ebene E1 in einem Winkel α1 zu einer Ebene angeordnet ist, in der die Längsachse X liegt, und die zweite Ebene E2 in einem Winkel α2.

In dem dargestellten Ausführungsbeispiel betragen die Winkel α1 und α2 ca. 15°. Allerdings können die Winkel α1 und α2 auch in einem Winkelbereich von 2,5° ≤ α ≤ 85° liegen, wobei bevorzugt der Winkel α in einem Winkelbereich 5° ≤ α ≤ 60° und weiter bevorzugt 15° ≤ α ≤ 45° liegt.

Die ersten Ausnehmungen 15 können auf der dem Kupplungsteil 30 zugewandten Seite in die erste Welle 10 eingearbeitet oder eingeformt sein und können weiterhin die erste Welle 10 ganz oder teilweise in der Axialrichtung durchdringen.

Die zweite Welle 20 ist auf der der ersten Welle 10 gegenüberliegenden Seite des Kupplungsteils 30 angeordnet und weist ebenfalls vier über den Umfang um die Längsachse X symmetrisch angeordnete zweite Ausnehmungen 25 auf. Die zweiten Ausnehmungen 25 sind, wie den Figuren 1-3 zu entnehmen ist, als Durchgangsöffnungen in der zweiten Welle 20 auf der dem Kupplungsteil 30 zugewandten Seite ausgebildet und mit Kontaktflächen 26 versehen. Die Kontaktflächen 26 sind nach Art einer Keilfläche 27 in Axialrichtung derart ausgebildet, dass sich die zweiten Ausnehmung 25 mit zunehmendem Abstand von dem Kupplungsteil 30 verjüngen.

Die beiden Kontaktflächen 26 auf den diametralen Seiten der zweiten Ausnehmung 25 können in jeweils einer dritten Ebene E3 und einer vierten Ebene E4 - siehe Figur 2 - angeordnet sein, wobei die dritte Ebene E3 in einem Winkel α3 zu einer Ebene angeordnet ist, die in der Längsachse X liegt und die vierte Ebene E2 in einem Winkel α4.

Wie in den Figuren 1 und 2 gezeigt ist, ist der vierte Winkel α4 größer als der dritte Winkel α3, wobei die Winkel α3 und α4 in einem Winkelbereich von 2,5° ≤ α ≤ 85° liegen, weiter bevorzugt liegt der Winkel α in einem Winkelbereich von 5° ≤ α ≤ 60° und weiter bevorzugt 15° ≤ α ≤ 45°. Im beispielhaften und dargestellten Ausführungsbeispiel beträgt der dritte Winkel α3 ca. 10° und der vierte Winkel α4 ca. 15°, wobei die Kontaktflächen 26 derart ausgebildet sind, dass mit zunehmendem Abstand von dem Kupplungsteil 30 sich der Querschnitt der zweiten Ausnehmungen 25 vergrößert.

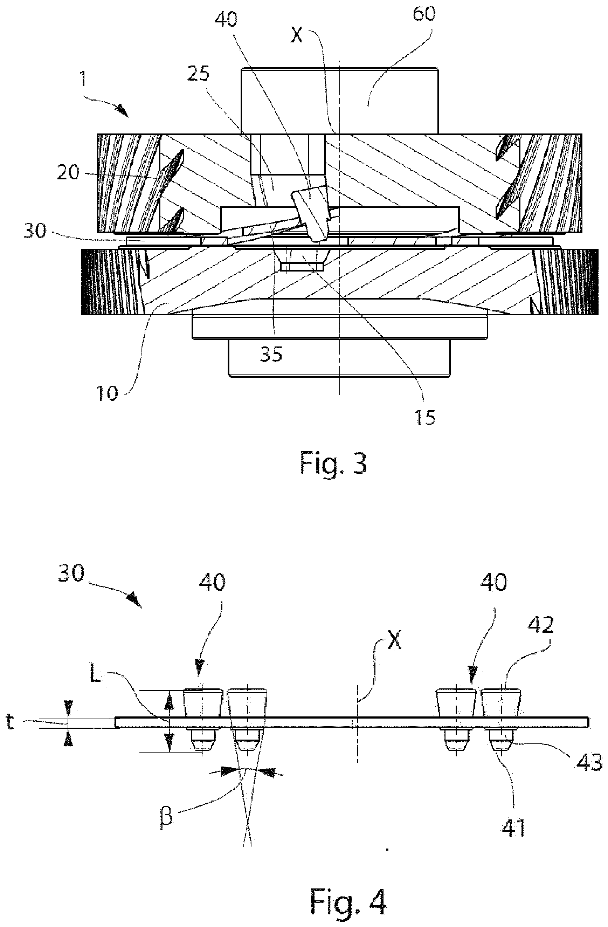

Das Kupplungsteil 30 ist detailliert in den Figuren 4 und 5 dargestellt und umfasst einen ringförmigen Grundkörper, der bevorzugt aus einem Federstahl hergestellt ist. Das Kupplungsteil 30 ist darüber hinaus plattenförmig mit einer Dicke t ausgebildet und weist über den Umfang symmetrisch um die Längsachse X angeordnet vier Kupplungsfinger 40 auf.

Die Kupplungsfinger 40 sind an einem freien Ende in einem Endbereich 36 jeweils eines Federstegs 35 in eine Einsetzöffnung 38 eingesetzt und können dort mittels einer Bördelung, Verpressung und/oder einer Verschweißungen befestigt sein. Der Federsteg 35 verbindet den Kupplungsfinger mit dem Grundkörper des Kupplungsteils 30, wobei bevorzugt der Grundkörper und der Federsteg 35 einstückig ausgebildet sind. Das Kupplungsteil 30 kann als ein Stanzteil hergestellt werden.

Der jeweilige Federsteg 35 ist von einer U-förmigen Nut 34 umgeben, durch die der Federsteg 35 einen Teilabschnitt eines Ringes bildet. An dem Endbereich der U-förmigen Nut 34 können Aufweitungen vorgesehen sein, durch die bei einer Federbewegung des Federstegs 35 die Kerbwirkung reduziert wird.

Insbesondere Figur 5 zeigt, dass das Kupplungsteil 30 vier Federstege 35 aufweist. Die Kupplungsfinger 40 können zusammen mit dem freien Ende des jeweiligen Federstegs 35 ausgelenkt werden, wobei maßgeblich die Dicke t und die Formgestaltung der Federstege 35 eine Federkraft vorgeben, entgegen der die Kupplungsfinger 40 ausgelenkt werden können.

Die Kupplungsfinger 40 können, wie in den Figuren 1-4 dargestellt ist, keilförmig oder kegelförmig ausgebildet sein und einen ersten Endbereich 41 und einen zweiten Endbereich 42 aufweisen. Der erste Endbereich 41 ist - wie dargestellt - mit einer Spitze versehen und der zweite Endbereich 42 mit einem Stumpf, wobei der Kupplungsfinger 40 einen Öffnungswinkel β aufweist, der typischerweise in einem Wertebereich von 5° ≤ β ≤ 90° liegt, weiter bevorzugt 15° ≤ β ≤ 60°. Im konkreten dargestellten Ausführungsbeispiel beträgt der Öffnungswinkel β ≈ 20°.

Der jeweilige Kupplungsfinger 40 kann zwischen dem ersten Endbereich 41 und dem zweiten Endbereich 42 einen Übergangsbereich 43 aufweisen, der eingerichtet ist, mit dem Federsteg 35 eine Verbindung herzustellen. Der Übergangsbereich 43 kann einen Wellenabsatz umfassen, der an die Einsetzöffnung 38 angepasst ist.

Mit Bezug auf Figur 4 ist ersichtlich, dass der jeweilige Kupplungsfinger 40 eine Länge L aufweist, wobei die Länge L ein Vielfaches der Dicke t beträgt. Bevorzugt trifft folgendes Verhältnis zu: L ≥ 3t, weiter bevorzugt L ≥ 5t.

Weiterhin ist es bevorzugt, wenn die Länge L größer ist als der Abstand A zwischen der ersten Welle 10 und der zweiten Welle 20.

Wieder unter Bezugnahme auf die Figur 1 ist ersichtlich, dass der jeweilige Kupplungsfinger 40 des Kupplungsteils 30, genauer gesagt der jeweilige erste Endbereich 41 der Kupplungsfinger 40, in jeweils eine erste Ausnehmung 15 der ersten Welle 10 greift. In diesem Zustand kann das Kupplungsteil 30 ein Drehmoment M auf die erste Welle 10 übertragen, wobei das Drehmoment M durch einen Formschluss zwischen den Kupplungsfingern 40 und den ersten Ausnehmungen 15 bzw. deren erster Kontaktflächen 16 übertragen wird.

Sobald ein Drehmoment M von dem Kupplungsteil 30 auf die erste Welle 10 übertragen wird, resultiert nach dem Prinzip der schiefen Ebene zwischen der ersten Kontaktfläche 16 und dem keil- oder kegelförmigen Kupplungsfinger 40 eine Kraft in Axialrichtung, durch welche der Kupplungsfinger 40 entgegen der Federkraft aus der ersten Ausnehmung 15 geschoben wird. Je größer das zu übertragene Drehmoment M wird, desto weiter wird der Federsteg 35 zusammen mit dem Kupplungsfinger 40 ausgelenkt und aus der ersten Ausnehmung 15 in Richtung der zweiten Welle 20 geschoben.

In Figur 2 erreicht das zu übertragende Drehmoment M einen vorgegebenen Wert, der einem Schaltmoment Ms entspricht. Sobald das Schaltmoment M_{S} erreicht wird, tauchen die Kupplungsfinger 40 in die jeweiligen zweiten Ausnehmungen 25 der zweiten Welle 20 ein und fortan wird ein Drehmoment M auf die zweite Welle 20 übertragen.

Sobald die Kupplungsfinger 40 - siehe Figur 3 - in die jeweiligen zweiten Ausnehmung 26 eintauchen, kommt der zweite Endbereich 42 mit den zweiten Kontaktflächen 26 in einen Wirkkontakt, wobei nach dem Prinzip der schiefen Ebene eine weitere Axialkraft auf den Kupplungsfinger 40 aufgebracht wird, durch die der Kupplungsfinger 40 vollständig aus den ersten Ausnehmungen 15 der ersten Welle 10 herausgezogen wird und die mechanische Kopplung zwischen dem Kupplungsteil 30 und der ersten Welle 10 unterbrochen ist.

Wenn das zu übertragende Drehmoment M abnimmt, wird aufgrund der Federkraft der Kupplungsfinger 40 aus den zweiten Ausnehmungen 25 in Richtung der ersten Ausnehmungen 15 in Axialrichtung zurückgeschoben bzw. zurückbewegt.

Die erste Welle 10 und/oder die zweite Welle 20 können aus einem Kunststoff oder einem Metall hergestellt sein. Weiterhin ist es bevorzugt, wenn die erste Welle 10 und/oder die zweite Welle 20 ein Zahnrad aufweisen bzw. aufweist bzw. ein Zahnrad sind bzw. ist. Die Zahnräder können in jeweils ein weiteres Zahnrad eingreifen, wodurch der Sicherheitsgurt durch einen entsprechenden Zugmechanismus gestrafft werden kann. Dabei ist es bevorzugt, wenn das erste Zahnrad der ersten Welle 10 und das zweite Zahnrad der zweiten Welle 20 mit dem jeweils weiteren Zahnrad ein Getriebe mit einer Übersetzung bilden, wobei die erste Welle 10 eine größere Übersetzung aufweist als die zweite Welle. So kann beispielsweise zunächst in einem Schnellgang der Sicherheitsgurt vorgespannt werden und beim Erreichen des Schaltmomentes mit einem langsamen Gang und hohen Drehmoment der Sicherheitsgurt stark gestrafft werden.

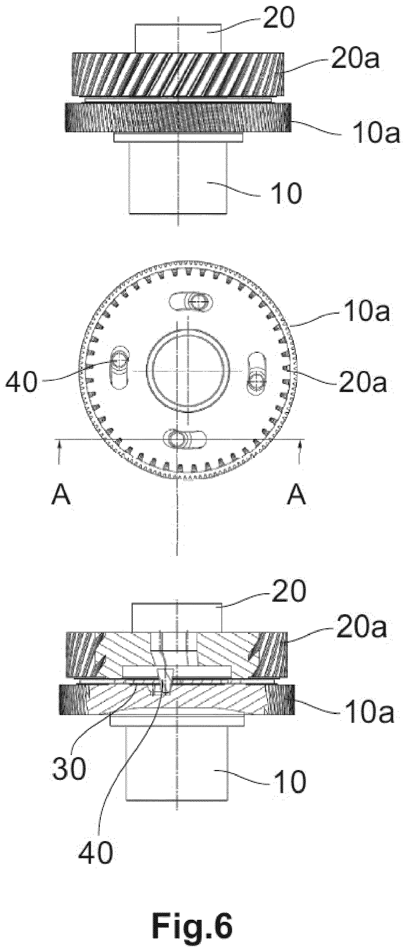

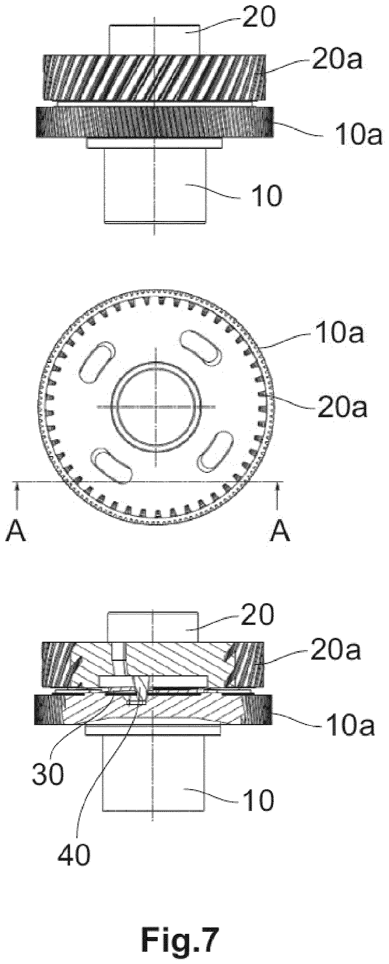

Eine Anordnung, bei der auf den Wellen 10 bzw. 20 Zahnräder 10a bzw. 20a angeordnet sind, zeigen die Figuren 6 bis 8. Dort sind konkrete Ausführungsbeispiele einer Ausdrückkupplung gemäß den Figuren 1 bis 3 dargestellt. Zusätzlich sind im Unterschied zu den Darstellungen in Figur 1 bis 3 auf der ersten Welle 10 eine Verzahnung 10a und auf der zweiten Welle 20 eine zweite Verzahnung 20a aufgebracht. Die Verzahnungen 10a und 20a können mit den Wellen 10 und 20 einstückig gestaltet oder als separate Zahnkränze auf den Wellen 10 und 20 befestigt sein. Die Wellen 10 und 20 mit den zugehörenden Verzahnungen 10a und 20a werden in der vorgenannten Art und Weise miteinander über das Kupplungsteil 30 und die Kupplungsfinger 40 bei Erreichen eines vorbestimmten Schaltpunktes gekuppelt.

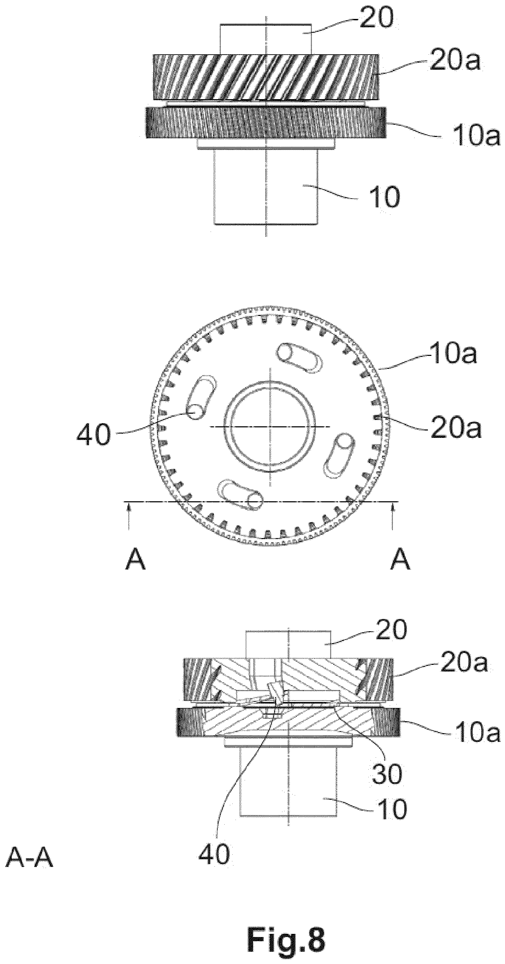

In den Figuren 6 bis 7 sind die miteinander zu kuppelnden Wellen 10 und 20 mit den Verzahnungen 10a und 20a oben in Draufsicht, in der Mitte in Seitenansicht und jeweils unten in teilweiser Schnittansicht dargestellt. Figur 6 zeigt, ähnlich wie die Prinzipdarstellung in Figur 1, die Wellen 10 und 20 und damit die Verzahnungen 10a und 20a im nicht gekuppelten Zustand, in Figur 6 bei Erreichen des Schaltpunktes zum Kuppeln und in Figur 8 im gekuppelten Zustand. Wie aus Figur 8 ersichtlich, sind die beiden durch die Verzahnungen 10a und 20a gebildeten Zahnräder auf den Wellen 10 und 20 miteinander gekuppelt, sodass beispielsweise durch eine andere Verzahnungswahl der Verzahnung 20a im Vergleich zur Verzahnung 10a eine größere Übersetzung in einem Antriebsstrang gewählt werden kann. Wird das Drehmoment wieder reduziert, können die Kuppelstifte 40 wieder in die erste Welle 10 einkuppeln, so dass die größere Übersetzung wieder aufgehoben wird.

### Bezugszeichenliste

- 1: Ausdrückkupplung
- 2: Gurtstraffer
- 3: Kraftfahrzeug
- 10: erste Welle
- 10a: Verzahnung auf 10
- 15: erste Ausnehmung
- 16: Kontaktfläche
- 17: Keilfläche
- 20: zweite Welle
- 20a: Verzahnung auf 20
- 25: zweite Ausnehmung
- 26: Kontaktfläche
- 27: Keilfläche
- 30: Kupplungsteil
- 33: Mittel
- 35: Federsteg
- 36: Endbereich
- 38: Einsetzöffnung
- 40: Kupplungsfinger
- 41: erster Endbereich
- 42: zweiter Endbereich
- 43: Übergangsbereich
- 60: Antriebswelle

- E: Ebene
- A: Abstand
- L: Länge
- T: Dicke
- M: Drehmoment
- X: Längsachse
- A: Winkel
- β: Winkel

## Patentansprüche

1. Ausdrückkupplung (1), insbesondere eines Gurtstraffers, aufweisend:
- eine erste Welle (10), eine zweite Welle (20) und ein Kupplungsteil (30),
- wobei das Kupplungsteil (30) zwischen der ersten Welle (10) und der zweiten Welle (20) in einer eine Axialrichtung vorgebenden Längsachse (X) angeordnet ist,
- wobei das Kupplungsteil (30) wenigstens einen Kupplungsfinger (40) aufweist, der zum Übertragen eines Drehmoments (M) in eine erste Ausnehmung (15) der ersten Welle (10) eingreift und beim Überschreiten eines vorbestimmten Werts eines zu übertragenden Drehmoments (M2) entgegen einer Federkraft in der Axialrichtung aus der ersten Ausnehmung (15) der ersten Welle (10) in eine zweite Ausnehmung (25) der zweiten Welle (20) verschoben wird und fortan das Drehmoment auf die zweite Welle (20) überträgt, **dadurch gekennzeichnet, dass** sobald das zu übertragende Drehmoment wieder einen vorbestimmten Wert unterschreitet, der Kupplungsfinger (40) durch die Federkraft aus der zweiten Ausnehmung (25) zurück in die erste Ausnehmung (15) der ersten Welle (10) bewegt wird.

2. Ausdrückkupplung (1) nach Anspruch 1,
**dadurch gekennzeichnet, dass** der wenigstens eine Kupplungsfinger (40) durch einen Federsteg (35) mit dem Kupplungsteil (30) verbunden ist.

3. Ausdrückkupplung (1) nach Anspruch 1 oder 2,
**dadurch gekennzeichnet, dass** der Federsteg (35) kreisförmig oder spiralförmig ausgebildet ist und einen freien Endbereich (36) aufweist, an dem der Kupplungsfinger (40) angeordnet ist.

4. Ausdrückkupplung (1) nach einem der vorgenannten Ansprüche,
**dadurch gekennzeichnet, dass** der Kupplungsfinger (40) beabstandet zu der Längsachse (X) angeordnet ist und einen ersten Endbereich (41) und einen zweiten Endbereich (42) aufweist, dass der erste Endbereich (41) in der Längsachse (X) auf der der ersten Welle (10) zugewandten Seite von dem Kupplungsteil (30) absteht, und dass der zweite Endbereich (42) in der Längsachse (X) auf der der zweiten Welle (20) zugewandten Seite von dem Kupplungsteil (30) absteht.

5. Ausdrückkupplung (1) nach einem der vorgenannten Ansprüche,
**dadurch gekennzeichnet, dass** ein Abstand (A) zwischen der ersten Welle (10) und der zweiten Welle (20) kleiner ist als eine Länge (L) des Kupplungsfingers (40).

6. Ausdrückkupplung (1) nach einem der vorgenannten Ansprüche,
**dadurch gekennzeichnet, dass** der Kupplungsfinger (40) kegelförmig oder keilförmig ausgebildet ist.

7. Ausdrückkupplung (1) nach einem der vorgenannten Ansprüche,
**dadurch gekennzeichnet, dass** die erste Ausnehmung (15) und/oder die zweite Ausnehmung (25) mindestens eine Kontaktfläche (16, 26) aufweisen bzw. aufweist, wobei die Kontaktfläche (16, 26) ausgebildet ist, beim Übertragenden eines Drehmoments (M) eine in Axialrichtung gerichtete Kraft auf den Kupplungsfinger (40) aufzubringen.

8. Ausdrückkupplung (1) nach Anspruch 7,
**dadurch gekennzeichnet, dass** die mindestens eine Kontaktfläche (16, 26) als eine in die Axialrichtung zulaufende Keilfläche (17, 27) ausgebildet ist.

9. Ausdrückkupplung (1) nach einem der Ansprüche 7 oder 8, **dadurch gekennzeichnet, dass** die mindestens eine Kontaktfläche (16, 26) in einer Ebene (E) liegt, die in einem Winkel (α) geneigt zu einer Ebene angeordnet ist, in der die Längsachse (X) liegt.

10. Ausdrückkupplung (1) nach einem der vorgenannten Ansprüche,
**dadurch gekennzeichnet, dass** das Kupplungsteil (30) um die Längsachse (X) mehrere Kupplungsfinger (40) aufweist, die bevorzugt um die Längsachse (X) umfangssymmetrisch angeordnet sind.

11. Ausdrückkupplung (1) nach einem der vorgenannten Ansprüche,
**dadurch gekennzeichnet, dass** die erste Welle (10) und die zweite Welle (20) mehrere Ausnehmungen (15, 25) aufweisen, die bevorzugt umfangssymmetrisch um die Längsachse (X) angeordnet sind.

12. Ausdrückkupplung (1) nach einem der vorgenannten Ansprüche,
**dadurch gekennzenet**, dass die erste Welle (10) und/oder die zweite Welle (20) ein Zahnrad aufweisen, bzw. aufweist.

13. Ausdrückkupplung (1) nach einem der vorgenannten Ansprüche,
**dadurch gekennzeichnet, dass** die erste Welle (10) und/oder die zweite Welle (20) drehbar auf der Antriebswelle (60) gelagert sind bzw. ist.

14. Gurtstraffer (2) mit einer Ausdrückkupplung (1) nach einem der vorgenannten Ansprüche.

## Claims

1. Disengaging coupling (1), in particular that of a seat belt tensioner, comprising:
- a first shaft (10), a second shaft (20) and a coupling part (30),
- wherein the coupling part (30) is arranged between the first shaft (10) and the second shaft (20) in a longitudinal axis (X) directed in an axial direction,
- wherein the coupling part (30) comprises at least one coupling finger (40), which engages with a first recess (15) of the first shaft (10) for the transmission of a torque and which is moved, when a previously defined value of a transmitted torque (M) is exceeded, counter to a spring force in the axial direction, out of the first recess (15) of the first shaft (10) and into a second recess (25) of the second shaft (20) and from that point on transmits the torque to the second shaft (20),
**characterized in that**, as soon as the transmitted torque again falls below a previously defined value, the coupling finger (40) is moved by the spring force back into the first recess (15) of the first shaft (10).

2. Disengaging coupling (1) in accordance with claim 1,
**characterized in that**
the at least one coupling finger (40) is connected to the coupling part (30) by means of a spring bar (35).

3. Disengaging coupling (1) in accordance with claim 1 or 2,
**characterized in that**
the spring bar (35) is implemented in a circular shape or in a spiral shape and **in that** it comprises a free end region (36) on which the coupling finger (40) is arranged.

4. Disengaging coupling (1) in accordance with any of the preceding claims, **characterized in that**
the coupling finger (40) is arranged at a distance to the longitudinal axis (X) and **in that** it comprises a first end region (41) and a second end region (42), that the first end region (41) projects, in the longitudinal axis (X) on the side facing the first shaft (10), from the coupling part (30), and **in that** the second end region (42) projects, in the longitudinal axis (X) on the side facing the second shaft (10), from the coupling part (30).

5. Disengaging coupling (1) in accordance with any of the preceding claims, **characterized in that**
the distance (A) between the first shaft (10) and the second shaft (10) is smaller than the length (L) of the coupling finger (40).

6. Disengaging coupling (1) in accordance with any of the preceding claims, **characterized in that**
the coupling finger (40) is implemented in a cone shape or in a wedge shape.

7. Disengaging coupling (1) in accordance with any of the preceding claims, **characterized in that**
the first recess (15) and/or the second recess (25) comprise(s) at least one contact surface (16, 26), wherein the contact surface (16, 26) is implemented to exert an axially directed force onto the coupling finger (40) when a torque (M) is transmitted.

8. Disengaging coupling (1) in accordance with claim 7,
**characterized in that**
the at least one contact surface (16, 26) is implemented as a wedge surface (17, 27) extending in the axial direction.

9. Disengaging coupling (1) in accordance with claim 7 or 8,
**characterized in that**
the at least one contact surface (16, 26) lies in a plane (E) which is arranged at an angle (α) to a plane in which the longitudinal axis (X) lies.

10. Disengaging coupling (1) in accordance with any of the preceding claims, **characterized in that**
the coupling part (30) comprises numerous coupling fingers (40) around the longitudinal axis (X) which are preferably arranged around the longitudinal axis (X) in a circumferentially symmetric manner.

11. Disengaging coupling (1) in accordance with any of the preceding claims, **characterized in that**
the first shaft (10) and the second shaft (20) comprises numerous recesses (15, 25) which are arranged, preferably in a circumferentially symmetric manner, around the longitudinal axis (X).

12. Disengaging coupling (1) in accordance with any of the preceding claims, **characterized in that**
the first shaft (10) and/or the second shaft (20) comprise(s) a gear wheel.

13. Disengaging coupling (1) in accordance with any of the preceding claims, **characterized in that**
the first shaft (10) and the second shaft (20) is(are) rotatably mounted on the drive shaft (60).

14. Seat belt tensioner (2) having a disengaging coupling (1) in accordance with any of the preceding claims.

## Revendications

1. Embrayage débrayable (1) notamment pour un prétensionneur de ceinture de sécurité comprenant :
- un premier arbre (10), un second arbre (20) et une pièce de couplage (30),
- la pièce de couplage (30) étant installée entre le premier arbre (10) et le second arbre (20) selon l'axe longitudinal (X) prédéfini par une direction axiale,
- la pièce de couplage (30) ayant au moins un doigt de couplage (40) qui, pour transmettre un couple (M), vient dans un premier évidement (15) du premier arbre (10) et qui en cas de dépassement d'une valeur prédéfinie du couple (M2) à transmettre, se déplace contre une force de ressort dans la direction axiale à partir du premier évidement (15) du premier arbre (10) dans un second évidement (25) du second arbre (20) et transmet ensuite le couple au second arbre (20),
embrayage **caractérisé en ce que**
dès que le couple à transmettre repasse sous une valeur prédéfinie, la force de ressort déplace le doigt de couplage (40) à partir du second évidement (25) en retour dans le premier évidement (15) du premier arbre (10).

2. Embrayage débrayable (1) selon la revendication 1,
**caractérisé en ce que**
le doigt de couplage (40) est relié à la pièce de couplage (30) par une tige élastique (35).

3. Embrayage débrayable (1) selon la revendication 1 ou 2,
**caractérisé en ce que**
la tige élastique (35) est en forme de cercle ou de spirale et comprend une zone d'extrémité libre (36) portant le doigt de couplage (40).

4. Embrayage débrayable (1) selon l'une des revendications précédentes, **caractérisé en ce que**
le doigt de couplage (40) est écarté de l'axe longitudinal (X) et comprend une première zone d'extrémité (41) et une seconde zone d'extrémité (42),
- la première zone d'extrémité (41) étant en saillie selon l'axe longitudinal (X) sur le côté de la pièce de couplage (30) tourné vers le premier arbre (10), et
- la seconde zone d'extrémité (42) est en saillie selon l'axe longitudinal (X) du côté de la pièce de couplage (30) tourné vers le second arbre (20).

5. Embrayage débrayable (1) selon l'une des revendications précédentes, **caractérisé en ce que**
la distance (A) entre le premier arbre (10) et le second arbre (20) est inférieur à la longueur (L) du doigt de couplage (40).

6. Embrayage débrayable (1) selon l'une des revendications précédentes, **caractérisé en ce que**
le doigt de couplage (40) est en forme de cône ou de coin.

7. Embrayage débrayable (1) selon l'une des revendications précédentes, **caractérisé en ce que**
le premier évidement (15) et/ou le second évidement (25) ont au moins une surface de contact (16, 26),
la surface de contact (16, 26) étant réalisée pour exercer à la transmission d'un couple (M), une force orientée dans la direction axiale sur le doigt de couplage (40).

8. Embrayage débrayable (1) selon la revendication 7,
**caractérisé en ce que**
la surface de contact (16, 26) est réalisée comme une surface de coin (17, 27) se terminant dans la direction axiale.

9. Embrayage débrayable (1) selon l'une des revendications 7 ou 8, **caractérisé en ce que**
la surface de contact (16, 26) est située dans un plan (E) incliné d'un angle (α) par rapport à un plan contenant l'axe longitudinal (X).

10. Embrayage débrayable (1) selon l'une des revendications précédentes,
**caractérisé en ce que**
la pièce de couplage (30) comporte plusieurs doigts de couplage (40) autour de l'axe longitudinal (X) de préférence répartis de façon symétrique en rotation autour de l'axe longitudinal (X).

11. Embrayage débrayable (1) selon l'une des revendications précédentes,
**caractérisé en ce que**
le premier arbre (10) et le second arbre (20) comportent plusieurs évidements (15, 25) de préférence répartis de façon symétrique en rotation autour de l'axe longitudinal (X).

12. Embrayage débrayable (1) selon l'une des revendications précédentes,
**caractérisé en ce que**
la premier arbre (10) et/ou le second arbre (20) comportent ou ont une roue dentée.

13. Embrayage débrayable (1) selon l'une des revendications précédentes,
**caractérisé en ce que**
le premier arbre (10) et/ou le second arbre (20) sont montés à rotation sur l'arbre d'entrainement (60).

14. Prétensionneur de ceinture de sécurité (2) comportant un embrayage débrayable (1) selon l'une des revendications précédentes.
